# FASCICULE DE BREVET EUROPEEN

(11) **EP 0 632 395 B1**
(45) Date de publication et mention de la délivrance du brevet: **10.05.2000**
(21) Numéro de dépôt: 94201778.1
(22) Date de dépôt: 22.06.1994
(51) Int. Cl.: G06F 9/38, G06F 15/78

(54) **Procédé pour exploiter un processeur numérique de traitement du signal et dispositif mettant en oeuvre le procédé**
Verfahren und System eines numerischen Prozessors
System and method to operate a digital signal processor (DSP)

(30) Priorité: 30.06.1993 FR 9308002
(43) Date de publication de la demande: 04.01.1995
(73) Titulaire: Koninklijke Philips Electronics N.V., 5621 BA Eindhoven (NL)
(72) Inventeur: Boursier, Alain, F-75008 Paris (FR); Giron, Louis, F-75008 Paris (FR); Goude, Marie, F-75008 Paris (FR)
(74) Mandataire: Charpail, François

(56) Documents cités:
- EP-A- 0 442 041
- GB-A- 2 208 187
- ICASSP 89, vol.4, 23 Mai 1989, GLASGOW pages 2480 - 2483 K.L.KLOKER ET AL. 'The Motorola DSP96002 IEEE FLOATING-POINT DIGITAL SIGNAL PROCESSOR'
- 22ND ASILOMAR CONFERENCE ON SIGNALS, SYSTEMS & COMPUTERS, 31 Octobre 1988, SAN JOSE pages 885 - 889 D.A.ASH 'Enhanced Performance Single-Chip DSP Requires Minimal External Circuitry'
- PATENT ABSTRACTS OF JAPAN vol. 15, no. 75 (P-1169) 21 Février 1991 & JP-A-02 294 734 (HITACHI LTD) 05 Décembre 1990
- PATENT ABSTRACTS OF JAPAN vol. 13, no. 127 (P-848) 29 Mars 1989 & JP-A-63 296 151 (NEC CORP.) 2 Décembre 1988

## Description

La présente invention concerne un procédé selon le préambule de la revendication 1 pour exploiter un processeur numérique de traitement du signal muni d'un séquenceur et d'un interpréteur d'instructions destinés à assurer l'exécution d'instructions placées dans une mémoire de programme du processeur numérique de signal, le dit processeur étant en outre associé à une mémoire extérieure contenant des instructions à exécuter.
L'invention concerne aussi un dispositif selon le préambule de la revendication 2 comportant un processeur numérique de traitement du signal muni d'une mémoire de programme, dans laquelle sont placées des instructions, ainsi que d'un séquenceur et d'un interpréteur d'instructions destinés à assurer l'exécution des dites instructions, le dispositif comportant en outre une mémoire extérieure au processeur numérique de signal, contenant des instructions.
De tels processeurs numériques de traitement du signal, qui sont appelés couramment "DSP" (pour : "Digital Signal Processor"), sont utilisés depuis environ 1980 dans le monde industriel, essentiellement pour les calculs numériques en temps réel. Ils peuvent aussi être utilisés en temps différé, par exemple en simulation et traitement d'images. Ils sont en outre employés dans des matériels grand-public, par exemple dans des terminaux de télématique, par exemple pour des applications de traitement de signaux audio, ou dans des MODEMS.

Un processeur numérique de traitement du signal (DSP) a une architecture spécialisée pour faciliter le calcul numérique en temps réel. Typiquement un DSP est un dispositif ultra-rapide avec un jeu d'instructions réduit qui peut réaliser des tâches limitées (telles que des tâches arithmétiques) de façon beaucoup plus rapide qu'un microprocesseur, lequel est plus puissant mais beaucoup plus lent. Son architecture est déterminée essentiellement par la recherche de la plus grande vitesse de calcul, au détriment des commodités de programmation et surtout de la capacité de mémoire, notamment de la mémoire de programme.
C'est pourquoi on a imaginé d'utiliser une mémoire extérieure contenant un programme d'application, éventuellement de grande taille, et dont les instructions sont amenées séquentiellement dans la dite mémoire de programme du processeur numérique de signal.
Un dispositif mettant en oeuvre une telle procédure est connu du document EP-A-0 472 386. Selon ce document un processeur numérique de signal interprète les instructions d'une mémoire de programme interne, dont les éléments logiciels sont des portions d'un programme d'application plus grand qui y sont amenées sous le contrôle d'une unité centrale, autrement dit d'un microprocesseur principal auquel le processeur numérique de signal est associé, ce microprocesseur principal stockant le dit programme d'application dans une bibliothèque de programmes, placée dans une mémoire autre que celle du processeur numérique de signal.

L'invention se propose de rendre plus économique la réalisation d'un système utilisant un processeur numérique de signal avec un programme d'application de grande taille, notamment en permettant de se passer du microprocesseur principal, mentionné plus haut, pour contrôler la gestion du transfert des instructions, depuis la mémoire contenant le programme d'application, vers la mémoire de programme du processeur numérique de signal.
Le document "ICASSP 89" vol 4, 23 mai 1989, Glasgow, K. L. KLOKER et al, intitulé "The Motorola DSP96002 IEEE floating-point digital signal processor", pages 2480-2483, divulgue bien un objet qui charge des programmes, sert des périphériques et réalise des mouvements de données.
Toutefois cet objet (qui est un "DMA", bien connu) qui n'est pas un logiciel programmable par l'utilisateur, n'a aucune autonomie ou indépendance, et ne fait qu'exécuter des tâches élémentaires sur commande externe, par exemple des chargements de programmes sont faits instruction par instruction et sans aucune analyse : il s'agit seulement de l'exécution banale d'ordres successifs reçus de l'extérieur.
Selon l'invention, on place dans la propre mémoire de programme du processeur numérique de signal des moyens logiciels pour transférer des instructions de la mémoire extérieure vers la dite mémoire de programme.
Un dispositif selon l'invention est remarquable en ce qu'il comprend à l'intérieur même de la mémoire de programme du processeur numérique des moyens pour transférer des instructions de la mémoire extérieure vers la dite mémoire de programme, constitués par une séquence d'instructions et comportant l'ensemble des moyens de gestion du transfert des instructions.
L'invention repose donc sur l'idée d'utiliser une partie (environ 30%) de la mémoire du processeur numérique de signal pour y placer en quelque sorte une unité centrale rudimentaire. Un avantage additionnel de procéder ainsi est que l'on peut en outre gagner du temps sur les opérations de transfert des instructions de la mémoire externe vers la mémoire interne, du fait qu'un processeur numérique de signal est en général plus rapide qu'un microprocesseur.
Avantageusement la dite séquence d'instructions est pourvue de moyens logiciels pour, lorsque l'instruction courante dans la mémoire externe est interprétable par l'interpréteur du processeur numérique de signal, la transférer directement dans la mémoire de programme, et pour traiter directement une instruction courante de la mémoire externe, lorsque cette instruction est une instruction de direction qui n'est pas interprétable par l'interpréteur du processeur numérique de signal.
En outre la dite séquence d'instructions est avantageusement pourvue de moyens logiciels pour gérer une pile, et pour gérer une pagination dans la mémoire externe.
Une telle organisation est très souple et adaptable puisqu'il suffit de modifier la séquence d'instructions qui gère les instructions extérieures pour permettre l'emploi de nouveaux types d'instructions, par exemple de type "MACRO".

Ces aspects de l'invention ainsi que d'autres aspects plus détaillés apparaîtront plus clairement grâce à la description suivante d'un mode de réalisation non limitatif.
La figure 1 représente très schématiquement une partie d'un dispositif comportant un processeur numérique de signal associé à une mémoire externe contenant des instructions à exécuter.
La figure 2 représente très schématiquement un terminal télématique muni d'un écran d'affichage et d'un processeur numérique de signal.
La figure 3 est un diagramme fonctionnel illustrant le fonctionnement des moyens logiciels qui lisent des instructions dans la mémoire extérieure et en gèrent le transfert vers la mémoire de programme.

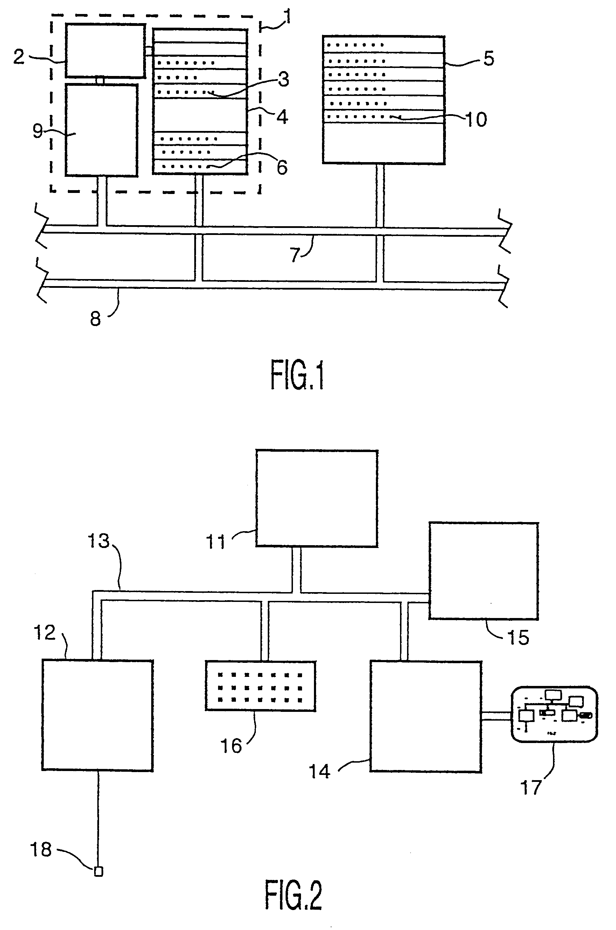

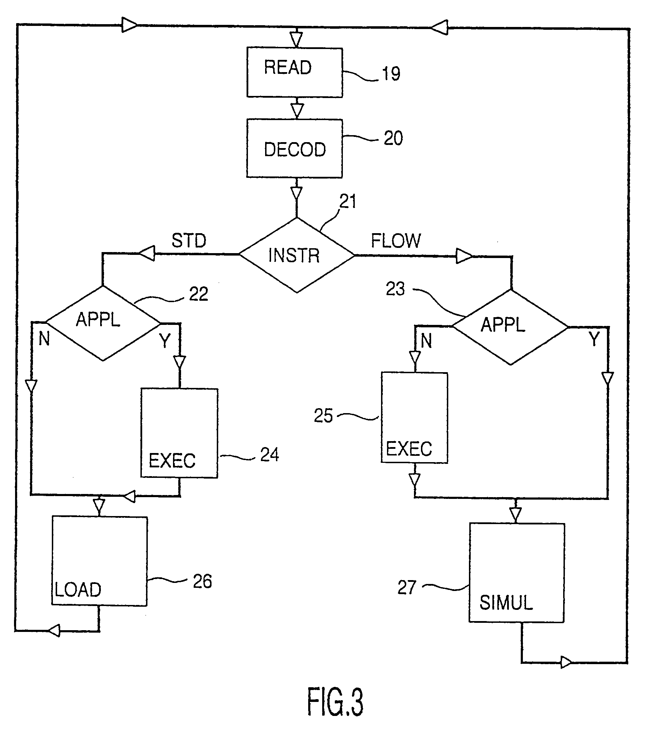

Le fonctionnement du dispositif sera décrit à titre d'exemple avec référence à un traitement de signal audio de type téléphonique, signal qui est transformé en échantillons numériques comprimés, au moyen d'un échantillonnage réalisé toutes les 125 µS. Une telle compression des données nécessite des calculs très rapides effectués en temps réel pour chaque échantillon. Il est clair pourtant que le dispositif pourrait aussi s'appliquer à tout autre calcul numérique en temps réel ou en temps différé.
Le dispositif dont le schéma est représenté sur la figure 1 comprend un processeur numérique de signal 1 muni d'un interpréteur d'instructions 2 destiné à assurer l'exécution d'instructions 3 placées dans une mémoire de programme 4, elle même contenue dans le processeur numérique de signal 1, ces instructions traitant des données contenues dans la mémoire de données 9, éventuellement amenées depuis (puis éventuellement renvoyées vers) une mémoire extérieure plus grande, sous la commande de certaines instructions 3. Un DSP possède un séquenceur de micro-instructions, avec un pointeur de programme qui permet à l'interpréteur 2 de déterminer quelle instruction 3 il doit traiter. Le traitement des instructions 3 peut faire appel notamment à une unité arithmétique et logique avec typiquement un multiplieur rapide (non représentés).
Le processeur numérique de signal comprend deux mémoires et deux bus distincts, les mémoires 4 et 9 respectivement pour le programme et pour les données, et les bus 8 et 7 respectivement pour le programme et pour les données. La mémoire 4 a habituellement une taille de l'ordre de quelques milliers d'instructions. Les instructions ou "codes" sont représentées par des valeurs numériques.
Le dispositif comporte en outre une mémoire 5 extérieure au processeur numérique de signal, contenant des instructions 10 d'un programme d'application à exécuter, par exemple un programme de compression de données audio.
Des moyens logiciels, constitués par une couche logicielle 6 dite "noyau" qui est placée à l'intérieur même de la mémoire de programme 4 du processeur numérique de signal, permettent d'amener séquentiellement les instructions 10 à la place des instructions 3 dans la mémoire 4.
Ceci est possible sans difficulté du fait qu'un processeur numérique de signal est en général capable d'adresser des mémoires extérieures de grande taille, et est capable en outre de gérer plusieurs tâches simultanément, ce qui permet de traiter le signal audio au moyen des intructions 3 tout en mettant à jour ces instructions au moyen des instructions 6 (il s'agit d'une sorte d'auto-programmation). Le noyau peut, soit exécuter ses propres instructions, soit renvoyer à l'exécution des instructions 3 dans le DSP, d'une manière qui sera expliquée plus en détail après.
Les instructions 6 en question sont exécutées pendant des temps libres. L'exécution des instructions 6 de noyau au moyen de l'interpréteur 2 permet de lire des instructions dans la mémoire 5 et d'en gérer le transfert vers la mémoire de programme 4. Ce noyau possède notamment des instructions permettant de gérer un pointeur pour désigner l'instruction courante dans la mémoire externe. Une instruction courante 10 est d'abord lue et enregistrée dans une mémoire tampon. Puis elle est analysée (par des instructions du noyau) pour savoir si elle est interprétable par l'interpréteur 2. Si cela est le cas, le noyau transfère directement cette instruction de la mémoire 5 dans la mémoire de programme 4.
Lorsqu'au contraire cette instruction est une instruction de direction (saut vers une adresse non consécutive dans la mémoire 5, ou code conditionnel impliquant un saut subséquent) qui n'est pas interprétable par l'interpréteur du processeur numérique de signal, alors le noyau l'interprète lui même (c'est-à-dire qu'il peut par exemple avoir à chercher l'adresse nouvelle dans la mémoire 5, suite à une instruction 10 de type "aller à") et l'exécute jusqu'à ce qu'il retrouve une instruction 10 exécutable par l'interpréteur 2. Le noyau est donc à la fois un éditeur et un interpréteur des instructions 10.
Pour lui donner les moyens d'une telle exécution de certaines instructions 10, le noyau est muni d'un pointeur de pile pour gérer une pile supplémentaire. Comme la propre pile d'un processeur numérique de signal est de taille très réduite, il faut en effet prévoir d'utiliser une pile supplémentaire pour la gestion particulière du transfert de programme de la mémoire 5 vers la mémoire 4. Une partie de la mémoire de données 9 peut être utilisée pour y installer cette pile, mais elle pourrait aussi être située dans la mémoire 5.
Le noyau est en outre muni d'instructions pour gérer une pagination dans la mémoire externe 5 (c'est-à-dire placer dans un registre le numéro de la page en cours dans la mémoire 5).
La gestion des subroutines dans le programme 10 (appel, retour au programme principal) est bien entendu réalisée aussi par le noyau 6 : il s'agit d'opérations de même nature que la gestion de sauts, conditionnels ou non.
Le fonctionnement du noyau peut être expliqué plus en détail au moyen du diagramme de la figure 3. A un instant donné le noyau lit une instruction dans la mémoire externe (5, figure 1), ceci étant représenté par le cadre 19, "READ". Ensuite cette instruction est décodée par le noyau (cadre 20, "DECOD"), un test est appliqué (losange 21, "INSTR") pour savoir si cette instruction est une instruction standard ("STD") ou une instruction de branchement ("FLOW"). Ceci peut être fait à partir de la valeur numérique du code de cette instruction, par exemple en la comparant au contenu d'une liste indiquant les codes de branchement.
Dans le premier cas un second test suit (losange 22, "APPL") pour déterminer si la partie de la mémoire 4 de la figure 1, réservée pour des instructions d'application, est pleine ou non. Si elle est pleine ("Y"), l'ensemble des instructions qu'elle contient est exécuté (cadre 24, "EXEC"), la mémoire 4 en étant vidée au fur et à mesure, puis l'instruction venant de la mémoire externe est chargée dans la mémoire 4. Pour l'exécution des instructions 3, le noyau place à leur suite une instruction de branchement du DSP qui lui redonnera la main, puis il envoie le pointeur de programme du DSP au début du jeu d'instructions qui vient d'être transféré. Celles-ci sont donc alors exécutées, après quoi le pointeur de programme du DSP renvoie au noyau, du fait de l'instruction de branchement qui a été placée à cet effet après les instructions exécutables.
Si le test 22 montre que la mémoire 4 n'est pas pleine, autrement dit s'il y reste encore de la place, l'instruction venant de la mémoire externe est tout de suite chargée dans l'espace ad-hoc de la mémoire 4.
Après ce chargement, le programme vient à la lecture (cadre 19) de l'instruction suivante (par incrémentation du pointeur de mémoire externe) dans la mémoire 5 de la figure 1, et la procédure continue.
Si après le test 21 il est constaté que l'instruction lue dans la mémoire 5 est une instruction de branchement ou assimilée ("FLOW"), alors un autre second test est utilisé (losange 23, "APPL") pour déterminer si la partie de la mémoire 4 de la figure 1 réservée pour des instructions d'application est vide ou non. Si elle est vide ("Y"), ce qui est relativement rare mais l'éventualité doit néanmoins être considérée, on passe directement au cadre 27, "SIMUL". Si elle n'est pas vide ("N"), les instructions qu'elle contient sont exécutées (cadre 25, "EXEC"), une instruction de branchement du DSP qui lui redonnera la main étant placée alors comme précédemment à la suite des instructions 3, puis on passe au cadre 27, "SIMUL", où l'instruction venant de la mémoire externe est simulée, c'est-à-dire exécutée directement par le noyau. Le noyau comporte à cet effet des instructions destinées à analyser si la condition de branchement éventuellement lue dans le programme externe est satisfaite (en recherchant les valeurs nécessaires à cette analyse dans le programme extérieur) et de déterminer l'adresse, dans le programme extérieur, où trouver la suite des instructions à exécuter. L'instruction dans le programme externe peut être par exemple une instruction "GO TO" renvoyant à une adresse non consécutive dans les instructions 10 de la figure 1. Alors la simulation consiste à charger un nouveau pointeur de la mémoire externe (tout en mémorisant l'ancien pour le retour) pour aller lire une instruction 10 de la figure 1 à une nouvelle adresse, cette lecture étant effectuée à nouveau dans le cadre 19, "READ", ou la procédure continue comme décrit ci-dessus, jusqu'à ce qu'une instruction soit à nouveau du type branchement ou saut ou une instruction d'appel ou de retour de subroutine.

Le terminal télématique de la figure 2 est constitué des éléments suivants, articulés autour d'un bus 13 :
- un modem 12 relié à une ligne téléphonique d'abonné 18,
- un processeur numérique de signal 11 (DSP),
- une mémoire principale 15,
- et une unité de traitement vidéo 14, qui est par exemple un circuit spécifique (de type dit "ASIC"), reliée à un écran d'affichage 17.
Aucun microprocesseur classique n'est prévu, et de ce fait le processeur numérique de signal doit gérer non seulement les traitements de compression de signal, mais aussi les fonctions du terminal téléphonique, ce qu'il fait au moyen d'un programme placé dans la mémoire 15 et placé par morceaux successifs dans sa mémoire interne de programme de la manière décrite plus haut. Il est relié en outre au clavier 16 du terminal par le bus 13.

## Revendications

1. Procédé pour exploiter un processeur numérique de traitement du signal muni d'un séquenceur et d'un interpréteur d'instructions destinés à assurer l'exécution d'instructions placées dans une mémoire de programme du processeur numérique de signal, en associant en outre le dit processeur à une mémoire extérieure contenant des instructions à exécuter, caractérisé en ce qu'on place dans la propre mémoire de programme du processeur numérique de traitement du signal des moyens logiciels pour transférer des instructions de la mémoire extérieure vers la dite mémoire de programme.

2. Dispositif comportant un processeur numérique de traitement du signal muni d'une mémoire de programme, dans laquelle sont placées des instructions, ainsi que d'un séquenceur et d'un interpréteur d'instructions destinés à assurer l'exécution des dites instructions, le dispositif comportant en outre une mémoire extérieure au processeur numérique de traitement du signal, contenant des instructions, ledit dispositif étant caractérisé en ce qu'il comprend à l'intérieur même de la mémoire de programme du processeur numérique des moyens pour transférer des instructions de la mémoire extérieure vers la dite mémoire de programme, lesdits moyens étant constitués par une séquence d'instructions et comportant l'ensemble des moyens de gestion du transfert des instructions.

3. Dispositif selon la revendication 2, caractérisé en ce que la dite séquence d'instructions est pourvue de moyens pour tester si l'instruction courante dans la mémoire externe est interprétable par l'interpréteur du processeur numérique de traitement du signal, et pour la transférer directement dans la mémoire de programme si les dits moyens pour tester ont fourni une réponse positive.

4. Dispositif selon la revendication 2, caractérisé en ce que la dite séquence d'instructions est pourvue de moyens pour traiter directement une instruction courante de la mémoire externe, lorsque les dits moyens pour tester ont fourni une réponse négative.

5. Dispositif selon l'une quelconque des revendications 2 à 4, caractérisé en ce que la dite séquence d'instructions est pourvue d'instructions pour gérer une pile.

6. Dispositif selon l'une quelconque des revendications 2 à 5, caractérisé en ce que la dite séquence d'instructions est pourvue d'instructions pour gérer une pagination dans la mémoire externe.

## Claims

1. A method of operating a digital signal processor having a sequencer and an instruction interpreter adapted to bring about the execution of instructions stored in a program memory of the digital signal processor, said processor being further associated with an external memory containing instructions to be executed, characterized in that software means for transferring instructions from the external memory to the actual program memory of the digital signal processor are loaded into said program memory.

2. A device comprising a digital signal processor having a program memory in which instructions are stored, as well as a sequencer and an instruction interpreter adapted to bring about the execution of said instructions, the device further comprising a memory external to the digital signal processor and containing instructions, said device being characterized in that it comprises means for transferring instructions from the external memory to the actual program memory of the digital signal processor are provided inside said program memory, said means being constituted by a sequence of instructions and comprising the whole of said means for controlling the transfer of instructions.

3. A device as Claimed in Claim 2, characterized, in that said sequence of instructions includes means for testing whether the current instruction in the external memory can be interpreted by the interpreter of the digital signal processor, and for transferring said current instruction directly into the program memory if said means for testing have given a positive response.

4. A device as Claimed in Claim 2, characterized, in that said sequence of instructions includes means for directly processing a current instruction of the external memory if said means for testing have given a negative response.

5. A device as claimed in any one of the Claims 2 to 4, characterized in that said sequence of instructions includes stack control instructions.

6. A device as claimed in any one of the Claims 2 to 5, characterized in that said sequence of instructions includes instructions for paging control in the external memory.

## Patentansprüche

1. Verfahren eines numerischen Prozessors, versehen mit einem Sequenzer und einem Interpretierer von Befehlen, dazu bestimmt, die Ausführung von Befehlen zu versichern, die in einem Programmspeicher des numerischen Prozessors des Signals abgelegt sind, wobei der Prozessor mit einem externen Speicher verknüpft ist, der durchzurührende Befehle enthält, dadurch gekennzeichnet, daß man in den eigenen Programmspeicher des numerischen Prozessors Software-Mittel für den Transfer von Befehlen des externen Speichers in den besagten Programmspeicher einbringt.

2. System nach mit einem numerischen Prozessor, mit einem Programmspeicher versehen, in dem Befehle enthalten sind, sowie eine Sequenzer und einen Interpretierer von Befehlen, dazu bestimmt, die Ausführung der besagten Befehle zu versichern, wobei das System zudem mit einem zum numerischen Prozessor externen Speicher versehen ist, in dem die Befehle enthalten sind, wobei das besagte System dadurch gekennzeichnet ist, daß es im Innern selbst des Programmspeichers des numerischen Prozessors Mittel für den Transfer der Befehle des externen Speichers zu dem besagten Programmspeicher enthält, wobei die besagten Mittel aus einer Befehlssequenz bestehen und die gesamten Mittel zur Verwaltung des Befehlstransfers enthalten.

3. System nach Anspruch 2, dadurch gekennzeichnet, daß die besagte Befehlssequenz mit Mitteln versehen ist, um zu testen, ob der laufende Befehl im externen Speicher vom Interpretierer des numerischen Prozessors interpretierbar ist, und für den direkten Transfer in den Programmspeicher, Wenn die besagten Testmittel eine positive Antwort lieferten.

4. System nach Anspruch 2, dadurch gekennzeichnet, daß die besagte Befehlssequenz mit Mitteln zur direkten Verarbeitung eines laufenden Befehls des externen Speichers versehen ist, wenn die Testmittel eine negative Antwort lieferten.

5. System nach einem beliebigen Anspruch 2 bis 4, dadurch gekennzeichnet, daß die besagte Befehlssequenz mit Befehlen zum Verwalten eines Stapels versehen ist.

6. System nach einem beliebigen Anspruch 2 bis 5, dadurch gekennzeichnet, daß die besagte Befehlssequenz mit Befehlen zum Verwalten einer Seitennumerierung im externen Speicher versehen ist.
